Europäisches Patentamt

European Patent Office

Office européen des brevets

(19)

(11) Veröffentlichungsnummer: **0 184 085**
**B1**

(12) **EUROPÄISCHE PATENTSCHRIFT**

(45) Veröffentlichungstag der Patentschrift: **09.01.91**

(21) Anmeldenummer: **85114846.0**

(22) Anmeldetag: **22.11.85**

(51) Int. Cl.⁵: **B 01 D 24/12, B 01 D 25/02**

(54) **Filterbett.**

(30) Priorität: **06.12.84 LU 85672**

(43) Veröffentlichungstag der Anmeldung:
**11.06.86 Patentblatt 86/24**

(45) Bekanntmachung des Hinweises auf die Patenterteilung:
**09.01.91 Patentblatt 91/02**

(84) Benannte Vertragsstaaten:
**BE DE FR GB IT NL**

(56) Entgegenhaltungen:
**DE-A- 7 661**
**DE-A-1 916 044**
**DE-C- 104 479**
**DE-U-7 149 512**
**GB-A-1 326 467**
**US-A-2 888 140**
**US-A-3 134 735**
**US-A-3 771 655**
**US-A-4 211 552**

(73) Patentinhaber: **ARBED S.A.**
**Avenue de la Liberté 19**
**L-2930 Luxembourg (LU)**

(72) Erfinder: **Tapella, Fernand**
**2, rue Bessemer**
**L-4032 Esch-Sur-Alzette (LU)**
Erfinder: **Koster, Joseph**
**75, rue de Lasauvage**
**L-4607 Differdange (LU)**

(74) Vertreter: **Freylinger, Ernest T. et al**
**Office de Brevets FREYLINGER & ASSOCIES B.P.**
**1 321, route d'Arlon**
**L-8001 Strassen (LU)**

EP 0 184 085 B1

Courier Press, Leamington Spa, England.

**Beschreibung**

Die Erfindung betrifft eine Filterbett, insbesondere im Rahmen einer Granulationsanlage für Hochofenschlacke.

In den bekannten, weltweit in der Hüttenindustrie angewandten Filterbecken für Hochofenschlacke, ist das Kernstück des Filterbetts eine Kiesfilterschicht, die man durch übereinanderschütten mehrerer Feststoffvorzugsweise Kies-Schichten bildet, wobei 3 oder mehr Korngruppen zur Anwendung kommen und die zuunterst angeordnete Schicht die höchste Korngrösse aufweisen muss. So weist z.B. eine obere Kiesschicht eine Korngrösse von 4—8 mm auf, eine mittlere Schicht besteht aus Kies mit einer Korngrösse von 8—16 mm und die untere Schicht hat eine Korngrösse von 16—25 mm.

Wesentlich ist, dass diese Schichtenordnung im Betrieb möglichst weitgehend aufrechterhalten bleibt, da innerhalb der unteren Schicht feingelochte Rohre eingebettet sind, die zum Ableiten des Filtrates dienen und die verstopfen, sofern einerseits keine einwandfreie Filterung erfolgt und andererseits feinkörnige Kiesanteile aus den oberen Schichten in die unteren Bereiche gelangen. Um die Wirksamkeit dieser Filterschicht kontinuierlich aufrecht zu erhalten, sowie die Ableitrohre nicht zu verstopfen, werden die Verunreinigungen d.h. die feinen Schlackensandanteile mit Hilfe von Pressluft ausgetrieben. Diese Pressluft wird in einem periodisch wiederkehrenden Zyklus im Gegenstrom durch die aufgebaute Filterschicht durchgeblasen. Dieser Pressluftstrom kann die gewünschte Schichtenordnung stören, manchmal sogar ohne Erfolg bleiben. Versagen diese Reinigungsmassnahmen, so bleibt nichts anderes übrig, als die gesamte Kiesmenge zu entfernen und ein neues Filterbett mit neuen Ableitrohren anzulegen.

Das Anlegen eines neuen Filterbettes ist langwierig und erfordert Sorgfalt, insbesondere beim Uebereinanderschütten der Kiesschichten unterschiedlicher Korngrössen. Aus diesem Grunde ist es besonders unbefriedigend, wenn man wegen lokaler Probleme, wie etwa Rohr-Verstopfungen oder-Erosionen, die in bestimmten Filterbett-Zonen auftreten, den gesamten Betrieb unterbrechen und das Filterbett erneuern muss.

Hinzu kommt, dass man bei nahenden Hochkonjunktur-Perioden in Bezug auf Schlackensand zuweilen gezwungen ist, das Filterbett prophylaktisch neu anzulegen, da die o.e. Pannen meist plötzlich in Erscheinung treten und deren Behebung Wochen in Anspruch nimmt.

Der Anmelder hat sich die Aufgabe gestellt, das Konzept des Filterbettes, so wie es zur Zeit in Grossanlagen besteht, grundlegend zu ändern und eine neue Anordnung auszuarbeiten, die ein rasches und problemloses Einwirken auf etwaige Pannen ermöglicht, welche gemäss dem Stand der Technik nur durch ein komplettes Erneuern des gesamten Filterbettes zu beheben sind.

Diese Aufgabe wird durch die erfüllt Erfindung, deien Merkmale darin bestehen, dass die übereinander geschichteten Filtermaterialien unterschiedlicher Korngrössen sich in individuellen, nebeneinander angeordneten, allseitig geschlossenen Kästen aus Stahlblech befinden, die abnehmbare Deckel aufweisen, wobei die Deckel, die Kastenböden und die Kastenseitenwände gelocht sind. Vorteilhafte Ausgestaltungen der Erfindung sind in den Unteransprüchen wiedergegeben.

Die Vorteile des neuen Fitlerbettes liegen hauptsächlich darin, dass man zur Behebung lokal auftretender Probleme die gesamte Anlage nur kurzzeitig stillegen muss, um auf die einzelnen verstopften und somit unwirksamen Kästen einwirken zu können. Das geeignete Filterbett kann leicht und mit der gewünschten Sorgfalt in Reservekästen zubereitet werden, die dann bei Bedarf rasch und problemlos eingesetzt werden. Weiter erlaubt die Erfindung, das Verhalten neuer Filtermassen im Betrieb zu testen, ohne im Falle mangelhafter Bewährung grössere Nachteile befürchten zu müssen, da der Austausch eines Kastens kurzfristig möglich ist.

Die Erfindung wird im folgenden anhand von Zeichnungen näher erlautert. Es zeigen

— die Figur 1 eine Draufsicht auf einen Teil eines erfinderungsgemässen Filterbettes und

— die Figuren 2 und 3 Schnitte gemäss den Linien II—II resp. III—III in Figur 1.

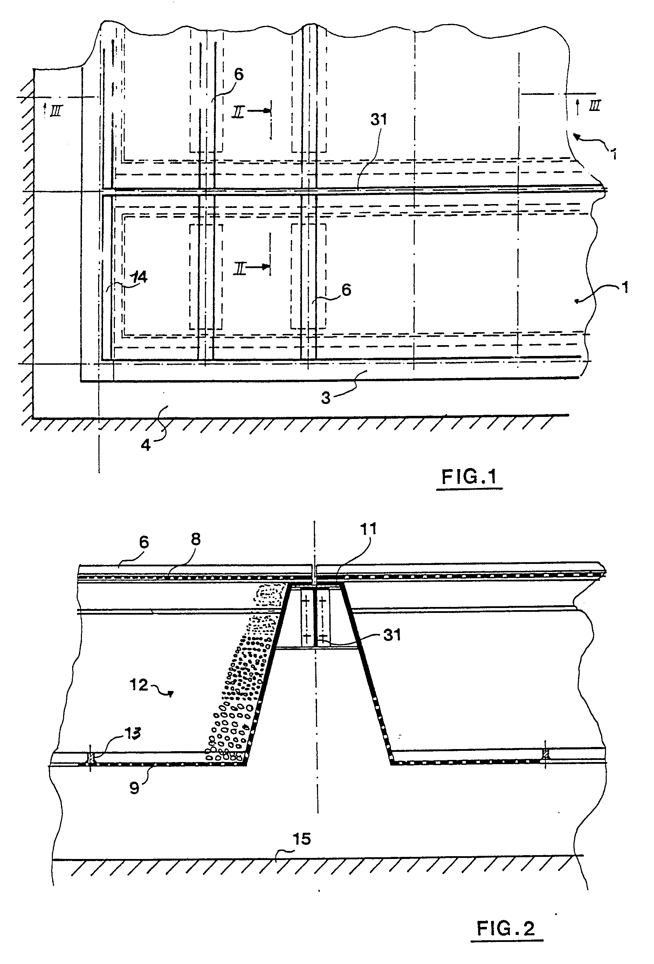

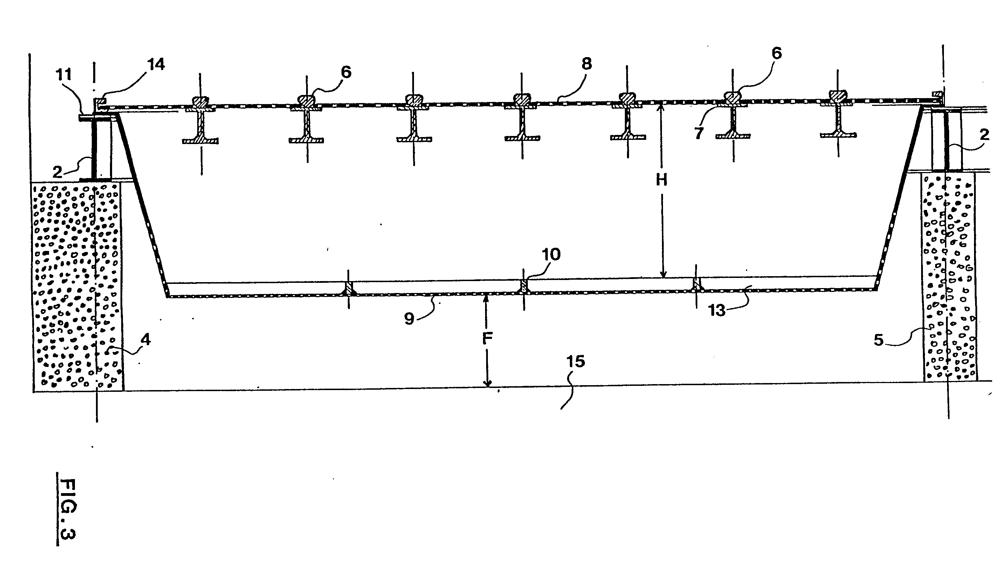

In Figur 1 ist ein Teil von zwei Kästen eines Filterbettes, das z.B. in neun Kästen aufgeteilt ist, dargestellt. Die in mehreren Reihen angeordneten Kästen 1 können entweder von verschiedener Grösse sein oder aber praktisch identische Abmessungen besitzen. Die Kästen 1 liegen mit ihren Seiten auf Längsträgern 2 und Querträgern, 3, 31 auf (siehe auch Fig. 2 und 3). Die Träger sind vorteilhafterweise gängige IPE Stahl-Träger. Die Längs- und Quer-Träger können auf den Seitenmauern 4 des Filterbettes sowie auf Zwischenmauern 5 aufliegen. Die Querträger 31 stützen sich im vorliegenden Fall lediglich mit ihren beiden Enden auf der Seitenmauer 4 und der Zwischenmauer 5 ab. Sollten Kästen mit grossen Abmessungen Eingesetzt werden, wäre es angebracht ein zu grosses Durchbiegen der Querträger 31 mittels Betonstützen zu verhindern.

Wie auf Figur 3 dargestellt, besitzen die Kästen 1 an der Oberseite parallel angeordnete Schienen 6, welche an der Unterseite ihrer Köpfe mit Flacheisen 7 versehen sind. Die Kastendeckel bestehen aus mit Löchern versehenen viereckigen Blechen 8. Diese werden seitlich zwischen den Flacheisen 7 und den Schienenköpfen eingeschoben und können individuell ausgewechselt werden. An beiden Seiten des Kastens wo sich keine Schienen befinden, werden die Bleche durch U-Eisen 14 gehalten. Die Schienen 6 liegen an ihren Enden auf den Querträgern 3 bzw 31 auf. Sie dienen insbesondere zum Festhalten der Bleche 8. Bei Anlagen in denen die granulierte Hochofenschbacke mittels einem Kran, der mit einen geschlitzten oder gelochten Greifer versehen ist, aus dem Filterbett zur Weiterverwendung entfernt wird, bieten die Schienen 6 einen geeigneten Schutz gegen unerwünschtes Aufprallen des Krangreifers auf die gelochten Bleche 8.

Da wie einleitend erwähnt, das Filterbett periodisch mit Pressluft gereinigt und aufgelockert wird, müssen die Kästen allseitig luftdicht auf den Trägern aufliegen; hierzu ist eine Zwischenschicht 11 aus Gummi vorgesehen welche auf die Trägerflansche aufgeklebt wird.

Der aus gelochten Blechen aufgebaute Kastenboden 9 ist mittels eines grobmaschigen Netzes auf Flacheisen 10 und 13 verstärkt. Die Höhe H eines Kastens beträgt im vorliegenden Ausführungsbeispiel 0,7 m, während der Freiraum F zwischen Kastenboden und Beton-Boden 15 der Anlage etwa 0,4 m beträgt. Die Längen- und Breiten-Abmessungen der Kästen liegen normalerweise in der Grössenordnug von 2 bis 6 Metern. Keinere Kästen sind zwar in der Herstellung teurer, erlauben aber auf der anderen Seite ein überaus kostengünstiges Erneuern der Filtermasse.

In Figur 2 sind auf der Kastenseite die verschiedenen Kiesschichten 12 schmatisch angedeutet. Wie aus der Figur ersichtlich, weist die zuunterst angeordnete Kiesschicht die grössten Körner auf. Die oberste Kiesschicht reicht bis satt unter die Bleche 8 und wirkt deren Durchbiegen entgegen.

**Patentansprüche**

1. Filterbett zum Trennen grosser Mengen Wasser von granulierter Hochofenschlacke mit Hilfe von Filtermassen, die aus übereinander geschichteten Feststoff-vorzugsweise Kies-Schichten unterschiedlicher Korngrössen bestehen, dadurch gekennzeichnet, dass die Filtermasse sich in individuell austauschbaren, nebeneinander angeordneten Kästen aus Stahlblech befindet, die abnehmbare Deckel aufweisen, wobei die die Kästen allseitig umschliessenden Deckel Kastenböden sowie Kastenseitenwände gelocht sind.

2. Filterbett gemäss Anspruch 1, dadurch gekennzeichnet, dass die Deckel aus einer Mehrzahl von Blechen (8) bestehen, welche einzeln auswechselbar sind.

3. Filterbett gemäss Anspruch 2, dadurch gekennzeichnet, dass quer über die Kästen an der Kastenoberseite parallele Schienen (6) angeordnet sind, welche an der Schienenkopfunterseite Flacheisen (7) besitzen, so dass die Bleche (8) zwischen die Schienen und die Flacheisen (7) einschiebbar sind.

4. Filterbett gemäss Anspruch 1, dadurch gekennzeichnet, dass die Kastenseiten sich an Stahl-Trägern (2, 3, 31), insbesonder H-Trägern abstützen.

5. Filterbett gemäss Anspruch 4, dadurch gekennzeichnet, dass zwischen den Stahl-Trägern (2, 3, 31) und den sich darauf abstützenden Kastenseiten eine Gummischicht (11) vorgesehen ist.

6. Filterbett gemäss Anspruch 4, dadurch gekennzeichnet, dass die Stahl-Träger (2, 3) auf Beton-Mauern (4, 5) aufleigen.

7. Filterbett gemäss Anspruch 4, dadurch gekennzeichnet, dass die Stahl-Träger (31) sich an Beton-Stützen abstützen.

8. Filterbett gemäss Anspruch 1, dadurch gekennzeichnet, dass die Kastenböden (9) mittels quer und längs angeordneten Flacheisen (10, 13) verstärkt sind.

9. Filterbett gemäss Anspruch 1, dadurch gekennzeichnet, dass der Abstand (H) zwischen Deckel und Kastenboden maximal 1 m beträgt.

**Revendications**

1. Couche filtrante pour la séparation de grandes quantités d'eau d'avec du laitier de haut fourneau granulé à l'aide de masses filtrantes constituées de couches superposées de matières solides — de préférence du gravier — de granulométries différentes, caractérisée en ce que les masses filtrantes se trouvent dans des caisses en tôle d'acier individuellement échangeables, aménagées l'une à côté de l'autre et pourvues de couvercles amovibles, et en ce que les couvercles, les fonds et les parois latérales, qui entourent les caisses de tous les côtés, sont pourvus de perforations.

2. Couche filtrante suivant la revendication 1, caractérisée en ce que les couvercles sont constitués d'une pluralité de tôles (8) qui sont échangeables individuellement.

3. Couche filtrante suivant la revendication 2, caractérisée en ce que des rails parallèles (6) sont aménagés à la partie supérieure des caisses et s'étendent transversalement par dessus ceux-ci, des rails (6) étant pourvus de fers plats (7) à la face inférieure du champignon, de sorte que les tôles (8) se laissent glisser entre les rails et les fers plats.

4. Couche filtrante suivant la revendication 1, caractérisée en ce que les côtes latéraux des caisses reposent sur des supports en acier (2, 3, 31), notamment sur des poutrelles H.

5. Couche filtrante suivant la revendication 4, caractérisée en ce qu'une couche en caoutchouc est prévue entre les poutrelles en acier (2, 3, 31) et les surfaces des caisses qui viennent reposer sur ces dernières.

6. Couche filtrante suivant la revendication 4, caractérisée en ce que les poutrelles en acier (2, 3) reposent sur des murs en béton (4, 5).

7. Couche filtrante suivant la revendication 4, caractérisée en ce que les poutrelles en aciers (31) prennent appui sur des socles en béton.

8. Couche filtrante suivant la revendication 1, caractérisée en ce que les fonds des caisses (9) sont renforcés à l'aide de fers plats (10, 13) qui sont disposés longitudinalement et transversalement.

9. Couche filtrante suivant la revendication 1, caractérisée en ce que l'écart (H) entre le couvercle et le fond des caisses comporte au maximum 1 mètre.

**Claims**

1. Filter bed for the separation of important water quantities from granulated blast furnace slag with the help of filtering materials consisting of superposed layers of solid matter, preferably of gravel, of different grain sizes, characterized in that the filtering material is stored in individually exchangeable, adjacent containers of steel sheet which have removable covers and in that the covers, the bottoms and the side walls delimiting the containers on all sides are perforated.

2. Filter bed according to claim 1, characterized in that the said covers consist of a plurality of sheets (8) which are individually exchangeable.

3. Filter bed according to claim 2, characterized in that at the upper side of the containers parallel rails (6) are laid across the containers, those rails having flat bars (7) affixed to the lower face of the rail head, so that the sheets (8) can be slideably engaged between the rails on the flat bars (7).

4. Filter bed according to claim 1, characterized in that the sides of the containers are supported by steel beams (2, 3, 31), particularly by H-beams.

5. Filter bed according to claim 4, characterized in that a layer of rubber (11) is interposed between the steel beams (2, 3, 31) and the faces of the containers resting thereon.

6. Filter bed according to claim 4, characterized in that the steel beams (2, 3) are resting on concrete walls (4, 5).

7. Filter bed according to claim 4, characterized in that the steel beam (31) is resting on a concrete support.

8. Filter bed according to claim 1, characterized in that the container bottoms (9) are reinforced by transversally and longitudinally arranged flat bars (10, 13).

9. Filter bed according to claim 1, characterized in that the distance (H) between the container cover and bottom is at most 1 m.

FIG.1

FIG.2

FIG.3